# EUROPEAN PATENT APPLICATION

(11) **EP 4 811 278 A1**
(43) Date of publication of application: **23.09.2026**
(21) Application number: 25315082.5
(22) Date of filing: 17.03.2025
(51) Int. Cl.: G06T 7/00

(54) **SYSTEM AND COMPUTER-IMPLEMENTED METHOD FOR DETECTING AT LEAST ONE DEFECT IN AN OPTICAL ARTICLE**

(71) Applicant: ESSILOR INTERNATIONAL, 94220 Charenton-Le-Pont (FR)
(72) Inventor: Konlambigue, Kangbéni Djotiname, 94000 CRETEIL (FR)
(74) Representative: Korakis-Ménager, Sophie

(57) **Abstract**

System and computer-implemented method for detecting at least one defect in a tested optical article, the system being configured to obtain an image of the tested optical article, slice the image to obtain sub-images, a size of the sub-images being determined based on a size of at least one of expected defects, input the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

## Description

### Technical field

Various aspects of this disclosure generally relate to methods and systems for detecting at least one defect in an optical article.

### Background information and prior art

During the different steps of the manufacturing of an optical article, for example an ophthalmic lens, various types of defects may appear.

To detect the defects a cosmetic control of the optical article may be performed. This control may be performed manually by an operator, using for example a neon tube light or an arc lamp.

However, when the cosmetic control is performed manually, the quality and reliability of the detection of defects may depend on the operator realising this detection.

Therefore, there is a need for a method for determining a location of defects in optical articles, in which the quality and reliability of the detection do not depend on the operator.

### Summary

The following presents a simplified summary to provide a basic understanding of various aspects of this disclosure.

One aspect of this disclosure is a system for detecting at least one defect in an optical article. The system is configured to obtain an image of the tested optical article, to slice the image to obtain sub-images, a size of the sub-images being determined based on a size of at least one of expected defects and to input the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

Another aspect of this disclosure is a system for training a machine learning model. The machine learning model is configured for detecting at least one defect and for determining a location of at least one defect in a tested optical article. The system is configured to obtain model images of model optical articles, the model images being labelled with a location of at least one defect, to slice the model images to obtain model sub-images, a size of the sub-images being determined based on a size of at least one of expected defects, and to train the machine learning model using the model sub-images.

Another aspect of this disclosure is a computer-implemented method for detecting at least one defect in an optical article. The computer-implemented method comprises obtaining an image of the tested optical article, slicing the image to obtain sub-images, a size of the sub-images being determined based on a size of at least one of expected defects, and inputting the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

Another aspect of this disclosure is a computer-implemented method for training a machine learning model. The machine learning model is configured for detecting at least one defect and for determining a location of at least one defect in a tested optical article. The method comprises obtaining model images of model optical articles, the model images being labelled with a location of at least one defect, slicing the model images to obtain model sub-images, a size of the sub-images being determined based on a size of at least one of expected defects, and training the machine learning model using the model sub-images.

Another aspect of this disclosure is a computer program comprising instructions which, when the computer program is executed by a computer, cause the computer to carry out a method for detecting at least one defect in an optical article. The method comprises obtaining an image of the tested optical article, slicing the image to obtain sub-images, a size of the sub-images being determined based on a size of at least one of expected defects, and inputting the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

Another aspect of this disclosure is a non-transitory program storage device, readable by a computer, tangibly embodying a program of instructions executable by the computer to perform a method for detecting at least one defect in an optical article. The method comprises obtaining an image of the tested optical article, slicing the image to obtain sub-images, a size of the sub-images being determined based on a size of at least one of expected defects, and inputting the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents a system for determining a location of defects in an optical article.
Figure 2 represents a calculation device.
Figure 3 represents a method for determining a location of defects in an optical article.
Figure 4 represents examples of defects.
Figure 5 represents a method to train the machine learning model.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the system for detecting at least one defect in an optical article

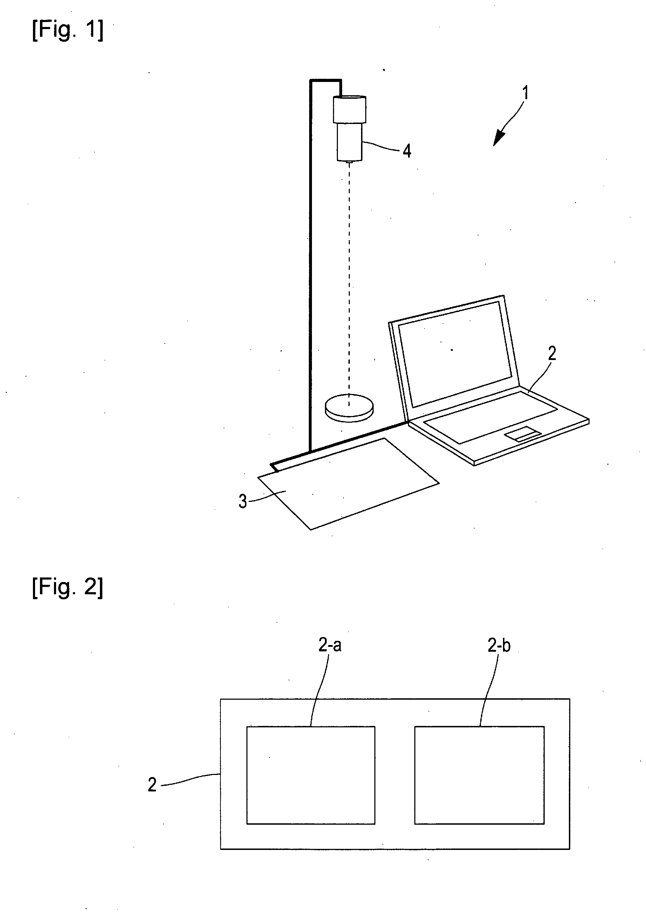

The figure 1 represents a system 1 for detecting at least one defect in an optical article and determining a location of the at least one defect.

The optical article may be integrated or may be intended to be integrated into eyewear.

Eyewear encompasses any type of head mountable devices designed to be worn in or in front at least one eye of a wearer, in any suitable form factor.

Eyewear includes head-mounted display devices (e.g. near eye display devices, augmented reality devices, virtual reality devices or mixed reality devices), helmets (with a visor), eyeglasses, googles, masks, visors, contact lenses, intraocular implants.

The optical article may be an ophthalmic lens.

The ophthalmic lens may be intended to be mounted in a frame of eyewear. The ophthalmic lens may be a semifinished lens, a finished lens, a lens with an optical power corresponding to a prescription, a plano lens without such optical power, a progressive lens, a lens with multiple sub optical elements made for controlling myopia progression, a tinted, polarized or a clear lens.

The detection of the defects and the determination of the location of the defects may be realised in the entire optical article or only on a part of the optical article. This part may be called the area of interest.

If the optical article is an uncut lens which is to be cut during an edging step to the size and shape of an eyeglass frame, the area of interest may be advantageously a part of the lens intended to be remaining after edging.

If the ophthalmic lens is a progressive addition lens, the area of interest of the ophthalmic lens may comprise at least:
- a far vision control point FV,
- a near vision control point NV,
- a main line M starting from one end of the area of optical interest, ending on the opposite end of the area of optical interest and passing through the far and near vision control points.

The system 1 may comprise a calculation device 2 for detecting defects in the optical article and determining a location of the defects in the optical article, a support 3 to support the optical article, and an image acquisition device 4.

The image acquisition device 4 may be configured and positioned, or positionable, to acquire images of the optical article.

The image acquisition device 4 may be a camera.

As presented in figure 2 the calculation device 2 comprises a memory 2-a and a processor 2-b. This calculation device 2 may be a computer, a mobile device like a smartphone or a tablet. The calculation device 2 may also be a virtual machine located on a cloud network or a server not co-located with the user of the system 1.

Examples of processors 2-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory 2-a may be computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor 2-a of the calculation device 2.

### Description of the method for detecting at least one defect in an optical article

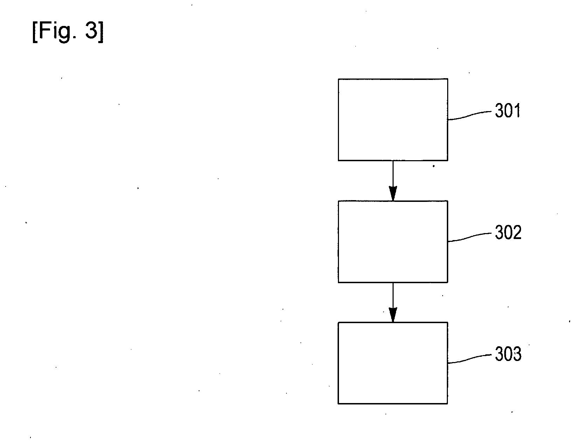

To detect defects in an optical article, the memory 2-a may store a computer program comprising instructions which, when the program is executed by the processor 2-b, cause the calculation device 2 to carry out a method for detecting at least one defect in the optical article, so called tested optical article. This method is represented in figure 3 and comprises:
- a step 301 of obtaining an image of the tested optical article,
- a step 302 of slicing the image to obtain sub-images, a size of the sub-images being determined bases on a size of the expected defects,
- a step 303 of inputting the sub-images in a machine learning model, the machine learning model having been previously trained with model sub-images the model sub-images being obtained by slicing of model images of model optical articles, the model-images being labelled with a location of at least one defect of the model optical articles.

The machine learning model may be also configured to output a location of at least one defect.

The machine learning model may be configured to output an indication of the presence or absence of at least one defect. For a machine learning model trained to determine locations of elements in an image, outputting an indication of the presence or absence of the element may be done by training this machine learning model with model image on which no element is present and by labelling this image with the indication that no element is present.

The expected size and quantity of defects may be determined based on various sources of information:
- historical defect data obtained using the model optical articles,
- predefined lookup tables associated with the tested optical article,
- parameters of a manufacturing process of the tested optical article, or
- defect data from other optical articles previously manufactured using a manufacturing process identical to that used for manufacturing the tested optical article.
Several methodologies may be employed, either independently or in combination, to enhance the determination of the expected size and quantity.

One may access a database of previously observed defects of the model optical articles. This database may include records of defect occurrences over time, along with their measured sizes and quantity. Such data may be used to establish a statistical distribution of expected defect characteristics, allowing the system to predict the most likely defect sizes and their expected number within a given batch. To obtain this data, the model optical articles may be used.

One may determine the expected defects based on predefined lookup tables associated with specific product Stock Keeping Unit (SKUs). These tables, which may be generated from quality control analysis, define expected defect sizes and quantity for each type of optical article. The system can automatically retrieve relevant defect parameters by identifying the SKU of the tested optical article.

The size and quantity of expected defects may also be estimated based on the specific manufacturing process step at which the tested optical article is inspected. Certain defects may be more prevalent at particular stages of production (e.g., polishing, coating, or molding), with distinct defect size distributions. One may also adjust its expected defect size estimation dynamically by considering the current process conditions, such as material properties, environmental factors, or machine settings.

One may also use previously manufactured optical articles, or the model optical articles to determine the expected size and quantity of the defects. In some embodiments the determination may be in real time to adapt the size or quantity of the expected defects during the manufacturing of the optical articles and so adapt during the manufacturing the method for detecting the defects. This has the advantage of allowing an adaptation of the detection of the defects to any shift appearing during the manufacturing process.

One may adapt or select the machine learning model based on the expected defect size and/or the size of the sub-images to ensure optimal detection. The machine learning model may be designed to cover a range of expected defect sizes and/or sizes of sub-images, avoiding frequent switching. If the defect size and/or the size of the sub-images remains within this range, the same slicing strategy is applied, allowing the use of the same machine learning model.

In embodiments, the size of the sub-images may be calculated once based on the characterized size of the expected defects. A slicing of the images into sub-images may then be determined based on the determined sub-image size and a size of the tested images. Alternatively, two or more slicing strategies may be predetermined, for example corresponding to two or more predetermined sizes of model sub-images used by two or more existing trained machine learning models, and depending on the calculated sub-image size, a specific one of the two or more slicing strategies and machine learning models may be chosen.

If the size of the expected defects and/or the size of sub-images is outside the predefined range or a threshold value representing the limit, addressable by the current machine learning model, of the size of the expected defects and/or the size of the sub-images has been reached, one may:
- Select another pre-trained machine learning model from a repository, each machine learning model being optimized for different range of defect sizes.
- Adjust the existing machine learning model by fine-tuning it with updated defect data.
- Train a new machine learning model if no suitable one exists, using model optical articles comprising defect matching the new size of the expected defects
- Send an indication to the user that the the size of the expected defects and/or the size of sub-images is not adapted to the current machine learning model.

The transition between models may be handled seamlessly, either through a gradual deployment mode, a hybrid inference approach, or a real-time confidence adjustment to maintain detection accuracy.

In other words, the model images of the model optical articles are obtained. The model images are labelled with the location of defects. The model images are then sliced to obtain model sub-images. The model sub-images are also labelled with the location of defects, if any, in the model sub-image, the labelling of the model sub-images possibly resulting from the inheritance of the label of the corresponding model image.

Some of the model sub-images of the model optical articles may contain no defect, therefore no label of the location of the defect. For some of the sub-images of the tested optical article, an indication of an absence of defect, may be outputted by the machine learning model.

The image of the tested optical article may be obtained by the image acquisition device 4.

The machine learning model may be a neural network. The neural network may be a convolutional neural network, such as RCNN-type models (e.g., Fast RCNN), YOLO-type models, SSD models, or RetinaNet.The size of the expected defects may be obtained using the model optical articles, more precisely the size of the expected defects may be the size of the defects located in the model optical articles.

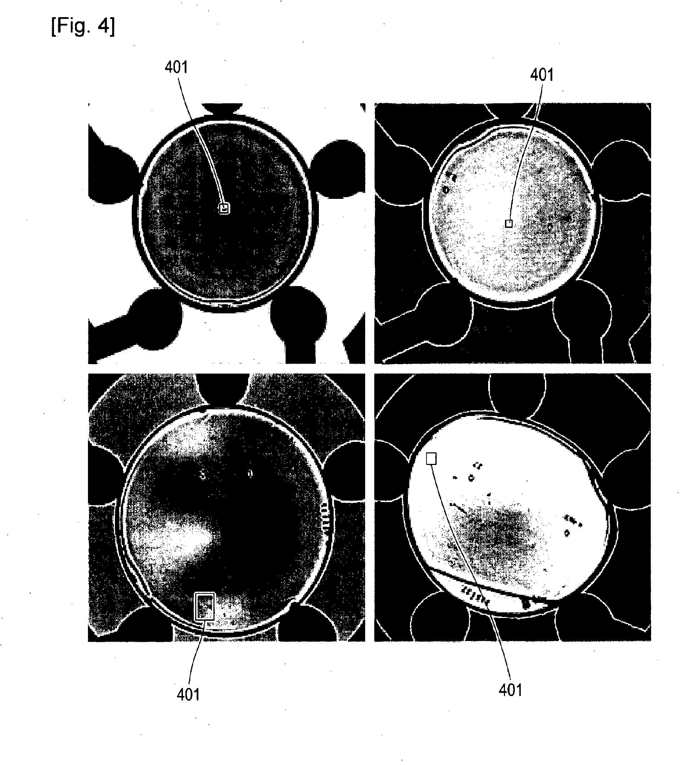

The figure 4 represents different examples of defects 401. As one may see on the figure 4, the size of the defects is small compared to the size of the optical article. Therefore, using a neural network, for example the convolutional neural networks (CNN), due to their nature of averaging filter will have the effect of "removing" the defects. The slicing of the image into sub-images and the feeding of the neural network with these sub-images will prevent this effect and will improve the detection, localisation and classification of the defects.

Slicing the images may give also better performance than increasing the number of pixels of the images. Indeed increasing the number of pixels may not change the ratio between the number pixels occupied by the defects and the total number of pixels of the image, where slicing the image may increase this ratio by decreasing the total number of pixels of the sub-image.

In other words, the image slicing does not change the size (in pixels) of the defects, but strongly modifies the ratio of useful pixels (so ones related to the defects) compared to the background.

**The** model sub-images may be obtained by slicing model images of the model optical articles. The slicing of the model images may be similar to the slicing of the image of the tested optical article.

The slicing of the image of the tested optical article may be realized so that at least two sub-images overlap, the overlap representing between 5 and 30% of an area of each of the at least two sub-images, more precisely between 10% and 25% of the area of each of the at least two sub-images, for example 20% of the area of each of the at least two sub-images.

The slicing of the model images of the model optical articles may be realized so that at least two model sub-images overlap, the overlap representing between 5 and 30% of an area of each of the at least two model sub-images, more precisely between 10% and 25% of the area of each of the at least two sub-images, for example 20% of the area of each of the at least two sub-images.

Depending on the size of the sub-images, the size of the images and the overlap an oversampling of the images may be required.

The size of the sub-images may be determined based on a characteristic size of the expected defects. The characteristic size of the expected defects may be determined from a subset of the expected defects. The subset may correspond to a predefined percentile (for example 80th percentile) of the expected defects when ranking by increasing size. The characteristic size of the expected defects may be that of the largest defect in the subset.

The sub-images and/or the images may be of different shape, for example the sub-images and/or the images may be of square shape or rectangular shape.

In embodiments, the size of the expected defects may be different in different areas of the optical article, for example when one might anticipate that a specific process can apply specific defects in specific areas. In this case the size of the sub-images may also be adapted to the area of the optical article. For example, for areas where the size of the expected defects is smaller one may use smaller sub-images and for areas where the size of the expected defects is bigger one may use bigger sub-images.

The size of the sub-images may be determined using the following formula:$S = \sqrt{P \times P \times R}$ Where:
- S is a characteristic length of the sub-images,
- P is a characteristic length of the of the image and,
- R is a ratio between the maximum size, among a proportion of the smallest defects, and the size of the image.

By the size of the image, one means the area of the image.

When the image and/or the sub-images are of square shape, the characteristic length, may be the length of the square.

When the image and/or the sub-images are of rectangular shape, the characteristic length, may be the length of the rectangle, the width of the rectangle or the diagonal of the rectangle.

When using the previously presented formula all the sub-images may have the same length.

In some embodiments the size obtained using the formula may be used directly or may be adapted to the needs of the machine learning model. In other words, the size of the sub-images obtained by a first way (for example using the previously presented formula) may be adapted to conform to the slicing strategy. This means that one may then use a size of sub-images slightly different so as to conform with the slicing strategy.

For example, when the size of the images is 1920x1920 and about 80% of the defects occupy an area of maximum 0.5% of our images one may obtained, using the previous formula a size of 135x135. Therefore if using a Yolo V8 neural network, as this neural network may handle images of arbitrary size as long as both sides are a multiple of 32, one may choose a size among the different possible sizes (160, 192, 224, 256, ...). Among these sizes it is advantageous to use 224x224 as it maximises the performance of the location of the defects.

The method of figure 3 may also comprise the determination of a type of the defects.

The machine learning model may be configured for outputting a type of the defects in the sub-images.

The method of figure 3 may comprise the concatenation of the sub-images on which the defects have been detect and/or localize in a single full image. In some embodiments some sub-images do contain any defect, these sub-images, containing no defect, may also concatenated.

The images (of the of the tested optical article or the model optical articles) may be chosen among:
- transmission images,
- polarisation images,
- phase images.

In embodiments, the images may also be fusion images. The fusion images are a combination of the previously cited images.

To obtain these images the support 3 may comprises a display device. The display device may be positioned, or positionable, to face a first side of the optical article and may be configured to illuminate the whole optical article or the area of interest of the optical article according to a plurality of successive specific patterns comprising a bright area and a dark area. The display device may be controlled by the calculation device 2 or another calculation device. This specific pattern may also be a uniform colour covering all or the majority of the display device.

The transmission images are obtained by displaying a uniform colour on the display device, typically white, red, green, or blue and for each colour obtaining a transmission image of the area of interest of the tested optical article or the whole area of the tested optical article using the image acquisition device 4. In our example as four colours are successively displayed by the display device 3, four transmission images are obtained by the image acquisition device 4.

The polarisation image of the tested optical article may be obtained by placing a polarising filter between the display device 3, and the image acquisition device 4.

The polarisation image of the tested optical article may also be obtained by using a display device 3 having a polarized light source to display a white homogeneous pattern, and by placing a polarization filter with the same polarisation axis than the display device 3 between the camera and the lens taking a picture with the image acquisition device 4.

The type of image may be same for the image of the tested optical article and the model images of the model optical articles.

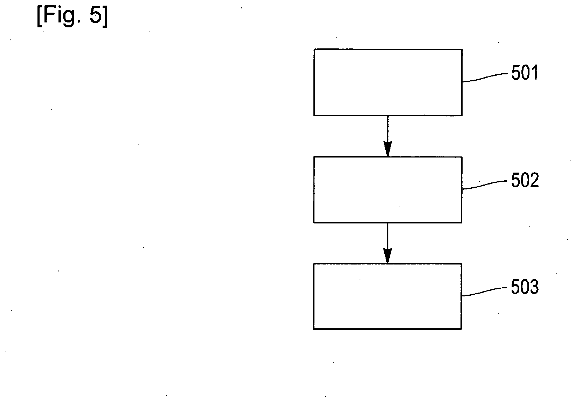

The figure 5 represents a method to train the machine learning model. This method comprises:
- a step 501 of obtaining a plurality, for example two, model images of model optical articles, the model images being labelled with the location of the defects,
- a step 502 of slicing the model images to obtain model sub-images, a size of the sub-images being determined based on a size of at least one of the defects,
- a step 503 of training the machine learning model using the labelled model sub-images.

The location of the defects may be, for each defect, parameters representing an area covered by the defects, for example a centre of the area and possibly the size of the area, or points of a perimeter of the area, or a shape of the area and extreme points of this shape.

The method of the figure 5 may also comprise selecting the model sub-images comprising at least one defect, and the training may be done primarily on the selected model sub-images. By primarily on, one means than more than 50% for example more than 60% more precisely more than 70% or 80% of the model sub-images used to realize the training comprise at least one defect.

This training may be performed iteratively until the machine learning model is accurate enough. As an example, training the model may imply model images associated with hundred model optical articles.

The training of the machine learning model may be done using the calculation device 2 or using another calculation device.

The training of the machine learning model may be done in one shot or several shots and/or upgraded regularly or at each using.

When using the Yolo version 8 neural network, various input image processing strategies were evaluated on a dedicated set of model images.

### Performances

The performance of the system 1 for detecting the defects and determining the location of the defects may be evaluated using the mean Average Precision (mAP) metric, which quantifies the accuracy of the machine learning model in localising defects. The following performance measures are considered:
- Mean Average Precision (mAP):
   The mAP is a standard metric for evaluating defects' location models. It represents the mean of the Average Precision (AP) values computed for defects' location.
- Training mAP:
   The training mAP is computed on the training dataset, which consists of images used to train the machine learning model. This metric indicates how well the model has learned patterns from the training data.
- Validation mAP:
   The validation mAP is computed on a validation dataset, which consists of images not used during training but employed to fine-tune the model's hyperparameters and prevent overfitting. This metric provides insight into how well the model generalizes to new data that it has not explicitly learned during training.
- Test mAP:
   The test mAP is computed on a test dataset, which consists of images completely independent from both training and validation datasets. This metric reflects the actual performance of the defect detection system in real-world scenarios and serves as the most reliable measure of generalization.

When one trains the machine learning model using full-size 1920×1920 model images, the machine learning model achieves suboptimal results, with an overall mean Average Precision (mAP) of approximately 15%, indicating a poor ability to detect defects effectively.

When one trains the machine learning model using images sliced into smaller 224x224 sub-images, the machine learning model achieves a significant improvement, with the training mAP reaching 78.7%, the validation mAP reaching 77.3%, and the test mAP improving to 69.7%.

When the model images incorporate a 20% overlap between adjacent sub-images, ensuring that defects located near slice boundaries were not omitted, the training mAP reaches 94.1%, the validation mAP reaches 87.9%, and the test mAP reaches 93.9%, demonstrating substantial improvement in the system's ability to generalize to unseen data.

## Claims

1. System (1) for detecting at least one defect in a tested optical article, the system being configured to:
- obtain an image of the tested optical article,
- slice the image to obtain sub-images, a size of the sub-images being determined based on a size of at least one of expected defects,
- input the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

2. The system (1) according to the claim 1,
the size of the at least one of the expected defects being determined based on at least one of:
• historical defect data obtained using the model optical articles,
• predefined lookup tables associated with the tested optical article,
• parameters of a manufacturing process of the tested optical article, or
• defect data from other optical articles previously manufactured using a manufacturing process identical to that used for manufacturing the tested optical article.

3. The system (1) according to the claim 1 or 2,
the machine learning model having been previously trained with model sub-images in which the slicing of the model images is similar to the slicing of the image of the tested optical article.

4. The system (1) according to any of the claims 1 to 3,
the slicing of the image of the tested optical article being realized so that at least two sub-images overlap, the overlap representing between 5 and 30% of an area of each of the at least two sub-images, more precisely between 10% and 25% of the area of each of the at least two sub-images, for example 20% of the area of each of the at least two sub-images and/or
the slicing of the model images of the model optical articles being realized so that at least two model sub-images overlap, the overlap representing between 5 and 30% of an area of each of the at least two model sub-images, more precisely between 10% and 25% of the area of each of the at least two sub-images, for example 20% of the area of each of the at least two sub-images.

5. The system (1) according to any one of the claims 1 to 4,
the system being configured to determine the size of the sub-images and/or the size of the model sub-images based on a characteristic size of the expected defects, the characteristic size of the expected defects being determined from a subset of the expected defects, said subset corresponding to a predefined percentile of the expected defects when ranking by increasing size, and wherein the characteristic size of the expected defects is that of the largest defect in said subset.

6. The system (1) according to the claim 5,
the system being configured to determine the size of the sub-images by using the following formula: $S = \sqrt{P \times P \times R}$
where S is a characteristic length of the sub-images,
P is a characteristic length of the of the image and,
R is a ratio between the characteristic size of the expected defects, and the size of the image.

7. The system (1) according to any one of the claims 1 to 6, the machine learning model being a neural network.

8. The system (1) according to the claim 7,
the neural network being a convolutional neural network.

9. The system (1) according to the claim 8,
the convolutional neural network being selected among RCNN-type models, YOLO-type models, SSD models, and RetinaNet.

10. The system (1) according to any one of the claims 1 to 9,
the system being further configured to determine a type of the at least one defect.

11. The system according to any one of the claims 1 to 10,
the system being configured for concatenating the sub-images after determining the location of the at least one defect.

12. The system (1) according to any one of the claims 1 to11, the optical article is intended for integration into eyewear.

13. System for training a machine learning model, the machine learning model being configured for detecting at least one defect and determining a location of at least one defect in a tested optical article,
the system being configured to:
• obtain model images of model optical articles, the model images being labelled with a location of at least one defect,
• slice the model images to obtain model sub-images, a size of the sub-images being determined based on a size of at least one of expected defects,
• train the machine learning model using the model sub-images.

14. Computer implemented method for detecting at least one defect in a tested optical article, the computer-implemented method comprising:
- obtaining (301) an image of the tested optical article,
- slicing (302) the image to obtain sub-images, a size of the sub-images being determined based on a size of at least one of expected defects,
- inputting (303) the sub-images in a machine learning model, the machine learning model having been previously trained with model sub-images, the model sub-images being obtained by slicing of model images of model optical articles, the model-images being labelled with a location of at least one defect of the respective model optical articles, the model sub-images being labelled with the location of the at least one defect based on labels of the corresponding model image, the machine learning model being made to output an indication of the presence or absence of at least one defect.

15. Computer implemented method for training a machine learning model, the machine learning model being configured for detecting at least one defect and for determining a location of at least one defect in a tested optical article,
the method comprising:
• obtaining (501) model images of model optical articles, the model images being labelled with a location of at least one defect,
• slicing (502) the model images to obtain model sub-images, a size of the sub-images being determined based on a size of at least one of expected defects,
• training (503) the machine learning model using the model sub-images.
